# EUROPEAN PATENT APPLICATION

(11) **EP 1 795 100 A1**
(43) Date of publication of application: **13.06.2007**
(21) Application number: 06023729.4
(22) Date of filing: 15.11.2006
(51) Int. Cl.: A47J 43/14

(54) **Device and method for breaking eggs**

(30) Priority: 15.11.2005 NL 1030427
(71) Applicant: Cuyten, Antonius Petrus Johannes Maria, 5591 MN Heeze (NL)
(72) Inventor: Cuyten, Antonius Petrus Johannes Maria, 5591 MN Heeze (NL)
(74) Representative: Verhees, Godefridus Josephus Maria

(57) **Abstract**

A device 1 for breaking eggs 2 has two parallel continual belts 5 to which egg holders 7 are fastened. The egg holders are formed by several cups 11 connected together in a row, transverse to the transport direction 13. The cups 11 have a bottom 17 provided with an opening 15.

The device 1 also has choppers 2, which can make cracks in the eggshells, and knives 33 to break off both parts 2a, 2b of the eggshells 2 from each other on both sides of the crack. The knives 33 have a width B that, seen in the transport direction 13 of the eggs, increases first slowly and then more quickly.

The end 33a of the knife 33 near the chopper 21 is slightly thinner than the width of the chopper 21, and the top 33b of the knife is under the top of the chopper 21 to prevent the egg from slipping behind the knife 33.

## Description

### BACKGROUND OF THE INVENTION:

### Field of the invention

The invention relates to a device for breaking eggs, comprising transport devices for moving eggs, as well as first devices to crack the eggshell, and second devices to break off both parts of the eggshell on both sides of the crack, which second devices seen in the transport direction of the eggs are placed after the first devices.

### Prior art

Such a device is well-known. In the known device the eggs are temporarily held fast at the location of the second devices and two rotating helical knives, with the helices running opposite each other, press both parts of an egg apart, so that the egg white and the egg yolk run out of the shell and are caught in a transport gutter provided with a slot, so that the egg white runs through the slot and the egg yolk remains behind in the transport gutter.

### Summary of the invention

An objective of the invention is to provide a device of the sort described in the preamble so that more eggs can be broken per time unit than in the known device. For this purpose the device according to the invention is characterised in that the second devices are formed by a knife, whose width increases in the transport direction of the eggs. The eggs are hereby broken during the transport of the eggs so that a continual process can be realised and more eggs can be broken per time unit.

In order to break the egg more efficiently the width of the knife, seen in transport direction, preferably increases first slowly and then more quickly.

In order to separate the egg white and the egg yolk from each other simply, an embodiment of the device according to the invention is characterised in that the top of the knife has a hollow shape.

A further embodiment of the device according to the invention is characterised in that the first devices comprise a chopper and a lever, an end of which is connected to the chopper, and a cam that works together with the other end of the lever, which first devices also comprise driving devices to rotate the cam, and pressing devices that keep the end of the lever pressed against the cam.

Still a further embodiment of the device according to the invention is characterised in that the end of the knife near the chopper is slightly thinner than the width of the chopper and the top of the knife, with the chopper at its top position, is slightly under the top of the chopper. This prevents the egg from slipping behind the knife.

Preferably the cam has a spiral shape with a steep residue side. Moreover the top of the chopper, seen in the lengthwise direction of the chopper, preferably has a hollow shape.

The invention relates to a method for breaking eggs in which first a crack is made in an egg and then both parts of the eggshell are pushed away from each other on both sides of the crack, so that the egg breaks and the egg white and the egg yolk run out of the egg and are caught.

With regard to the method, the invention is characterised in that both parts of the eggshell are pushed apart by transporting the egg over a knife that becomes wider in the transport direction. This means the eggs can be broken in a continual process. The egg is preferably held still when the crack is made, though this only needs to be for a very short time.

An embodiment of the method according to the invention is characterised in that the egg white and the egg yolk are caught by transporting the egg over a knife that is hollow at the top. This means the egg yolk remains in the gutter-shaped knife and the egg white runs down, so that the egg white and egg yolk are separated from each other.

### Brief description of the drawings

The invention will be elucidated more fully below on the basis of drawings in which an embodiment of the device according to the invention is shown. In these drawings:
Figure 1 shows an embodiment of the device according to the invention in lengthwise cross-section;
Figure 2 shows a detail of the device from the top; and
Figure 3 shows a cross-section of the device along the line III-III shown in figure 2.

### Detailed description of the drawings

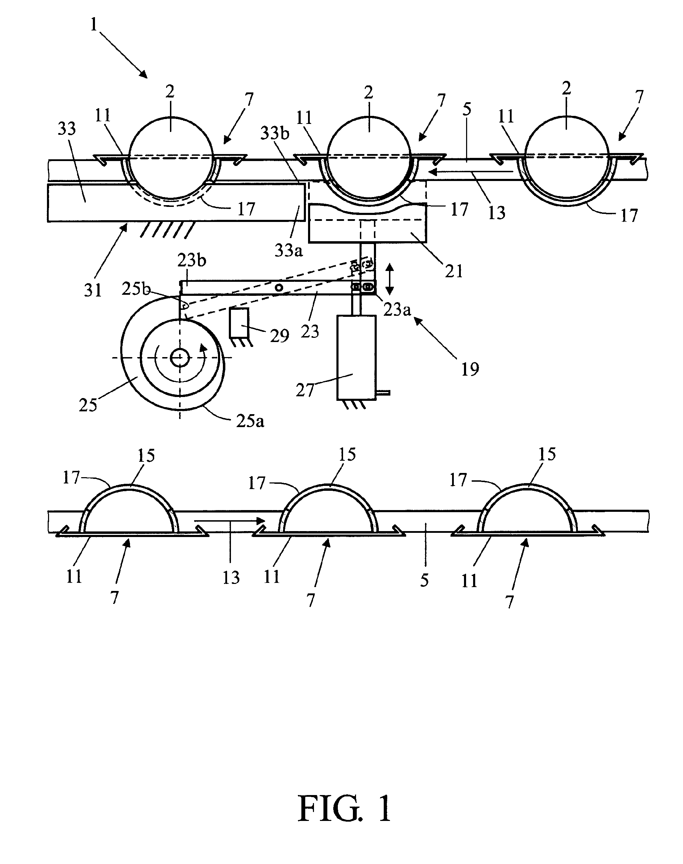

Figures 1, 2 and 3 show an embodiment of the device according to the invention for breaking eggs in respectively lengthwise cross-section, top view and transverse cross-section. The device 1 has transport devices for moving eggs 2. The transport devices have two parallel continual belts 5 running at a distance from each other around two guiding rollers (not shown in the figures) to which egg holders 7 are fastened.

The egg holders are formed by several cups 11 connected together in a row, transverse to the transport direction 13. The cups 11 have a bottom 17 provided with an opening 15 and of these for example 6, 12, 18, etc., are present in a row.

The device 1 also has first devices 19 which can make a crack in an eggshell. These first devices 19 have several choppers 21 next to each other. The cups 11 present in a row are transported continually by means of the conveyor belt 5. At the moment that a row of cups 11 is exactly above the choppers, the choppers 21 make a crack in the eggs 2 present in the cups. The choppers 21 have a hollow shape for this purpose, as seen in the lengthwise direction of the chopper.

Each of the choppers 21 is connected to an end 23a of a lever 23, whose other end 23b works together with a cam 25. This cam has a spiral shape 25a with a steep residue side 25b. The end 23b of the lever is pressed against the cam 25 by pressing devices that are formed by an air cylinder 27. There are rubber stops 29 to stop the lever from banging the cam on the residue side. Not shown driving devices ensure that the cams rotate.

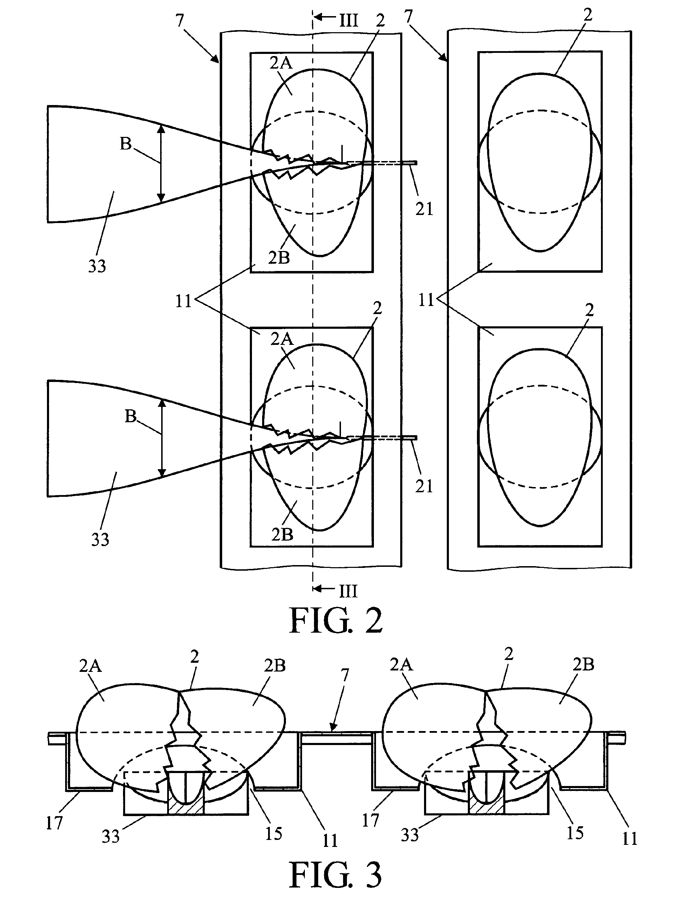

Further the device has second devices 31 to break both parts 2a, 2b of the eggshell 2 off from each other on both sides of the crack. These second devices seen in the transport direction 13 of the eggs are placed directly after the first devices 19 and are formed by several knives 33 present next to each other with a width B that, seen in the transport direction 13 of the eggs, increases first slowly and then more quickly, see figure 2. The end 33a of the knife 33 near the chopper 21 is preferably slightly thinner than the width of the chopper 21, see figure 2, and the top 33b of the knife is preferably slightly under the top of the chopper 21 (when the chopper is in the top position), see figure 1, to prevent the egg from slipping behind the knife 33. The choppers 21 remain in the top position for a short time so that the eggs during the further transport are taken over by the knives 33 without jerking. The top 33b of the knife 33 has a hollow shape, see figure 3, to catch the egg yolks of the broken-open eggs.

Although in the above the invention is explained on the basis of the drawings, it should be noted that the invention is in no way limited to the embodiment shown in the drawings. The invention also extends to all embodiments deviating from the embodiment shown in the drawings within the context defined by the claims.

## Claims

1. Device for breaking eggs, comprising transport devices for moving eggs, as well as first devices to crack the eggshell, and second devices to break off both parts of the eggshell on both sides of the crack, which second devices seen in the transport direction of the eggs are placed after the first devices, **characterised in that** the second devices are formed by a knife whose width increases in the transport direction of the eggs.

2. Device according to claim 1, **characterised in that** the width of the knife, seen in the transport direction, increases first slowly and then more quickly.

3. Device according to claim 1 or 2, **characterised in that** the top of the knife has a hollow shape.

4. Device according to one of the preceding claims, **characterised in that** the first devices comprise a comprise a chopper and a lever, an end of which is connected to the chopper, and a cam that works together with the other end of the lever, which first devices also comprise driving devices to rotate the cam, and pressing devices that keep the end of the lever pressed against the cam.

5. Device according to claim 4, **characterised in that** the end of the knife near the chopper is slightly thinner than the width of the chopper and the top of the knife is slightly under the top of the chopper when the chopper is in its top position.

6. Device according to claim 4 or 5, **characterised in that** the cam has a spiral shape with a steep residue side.

7. Device according to claim 6, **characterised in that** the top of the chopper, seen in the lengthwise direction of the chopper, has a hollow shape.

8. Method for breaking eggs so that a crack is first made in an egg and then both parts of the eggshell are pressed away from each other on both sides of the crack, so that the egg breaks and the egg white and the egg yolk run out of the egg and are caught, **characterised in that** both parts of the eggshell are pressed apart by transporting the egg over a knife that becomes wider in the transport direction.

9. Method according to claim 8, **characterised in that** the egg white and the egg yolk are caught by transporting the egg over a knife that is hollow at the top.
